# EUROPÄISCHE PATENTSCHRIFT

(11) **EP 1 366 882 B1**
(45) Veröffentlichungstag und Bekanntmachung des Hinweises auf die Patenterteilung: **06.09.2006**
(21) Anmeldenummer: 03011680.0
(22) Anmeldetag: 23.05.2003
(51) Int. Cl.: B29C 45/17

(54) **Kühlung eines Einspritzbausteines**
Cooling of an injection module
Refroidissement d'un module d'injection

(30) Priorität: 02.06.2002 DE 10224334
(43) Veröffentlichungstag der Anmeldung: 03.12.2003
(73) Patentinhaber: Battenfeld GmbH, D-58540 Meinerzhagen (DE)
(72) Erfinder: Eckardt, Helmut, Dipl.-Ing., 58540 Meinerzhagen (DE); Wülfrath, Marc, Dipl.-Ing., 58540 Meinerzhagen (DE); Van der Steen, Stephan, Dipl.-Ing., 57489 Drolshagen (DE); Michaeli, Walter, Prof. Dr.Ing.Dr.-Ing. E.h., 52072 Aachen (DE); Jüntgen, Tim, Dipl.-Ing., 52062 Aachen (DE); Arndt, Johannes, cand.ing., 52072 Aachen (DE)

(56) Entgegenhaltungen:
- DE-A- 19 528 975
- DE-C- 4 435 012
- FR-A- 1 192 475
- US-A- 5 785 247

## Beschreibung

Die Erfindung betrifft eine Vorrichtung zum Kühlen eines Einspritzbausteines, die mindestens eine Injektionsnadel, einen Betätigungszylinder und mindestens eine erste Flüssigkeitsleitung umfasst sowie ein Verfahren zum Kühlen eines Einspritzbausteines, das die Schritte umfasst: a) Einspritzen einer plastischen Masse von einer Einspritzeinheit entlang eines Schmelzefließweges in die Kavität eines Spritzgießwerkzeugs; b) Einspritzen eines Fluids in die noch schmelzflüssige Masse, so dass diese an die Wandungen der Kavität gepreßt wird, wobei das Einspritzen über einen Einspritzbaustein erfolgt; c) Abkühlenlassen der Masse, bis diese selbsttragend das Formteil bildet; d) Entformen des Formteils aus der Kavität des Spritzgießwerkzeugs.

Einspritzbausteine der gattungsgemäßen Art sind im Stand der Technik bekannt. Die **DE 39 36 289** schlägt eine Düse vor, die als Hohlnadel ausgebildet ist, in der ein Nadelkem verschieblich angeordnet ist. Ein am Nadelkem als Pilz oder Teller ausgebildeter Kopf wird über eine Feder gegen die Hohlnadel vorgespannt, so dass diese gegen die Fluidpassage verschlossen ist. Erst das durch die Hohlnadel geführte Fluid hebt den Kopf an und ermöglicht die Eingabe des Fluids in die Kunststoffschmelze. In Abhängigkeit von Fluiddruck und Vorspannung des Nadelkems ist der Öffnungsspalt vorbestimmbar. Die Düse wird direkt in ein Spritzgußwerkzeug eingebaut und findet in erster Linie bei der Injektion von Gasen ihre Anwendung.

**Des weiteren zeigt die FR-A-1 192 475 einen Einspritzbaustein, über** den ein gespritzter Vorformling mittels der Blastechnik hergestellt wird. Dieser Einspritzbaustein verfügt über ein Kanalsystem, mittels dem der Einspritzbaustein gekühlt werden kann.

Die DE 44 35 012 C1 offenbart ebenfalls die Möglichkeit, einen Einspritzbaustein zu kühlen, wobei hier vorgesehen ist, nach jedem Spritzgießzyklus den Einspritzbaustein bei geöffnetem Werkzeug zu kühlen, in dem er mittels eines Kühlelementes mit Kaltgas umspült wird.

Vorrichtungen und Verfahren zum Einspritzen von Flüssigkeiten, insbesondere von Wasser, sind ebenfalls aus diversen Veröffentlichungen, beispielsweise dem IKV-Aachen, bekannt.

Bei allen bekannten Verfahren und Vorrichtungen ergibt sich das Problem, dass im Bereich des Einspritzbausteines Undichtigkeiten auftreten, die dazu führen, dass der gewünschte Druck nicht in jedem Fall im Inneren des Formteils aufrechterhalten bleibt. Zusätzlich ist es bei der Verwendung von Flüssigkeiten zum Injizieren von Nachteil, wenn diese unkontrolliert austreten kann.

Der Erfindung liegt daher die **Aufgabe** zugrunde, einen Einspritzbaustein anzubieten, bei dem diese Nachteile vermieden werden und um den Einspritzbaustein herum möglichst schnell die plastische Masse aushärtet und somit eine Dichtigkeit gegen die Flüssigkeit aber auch gegen die Schmelze, erreicht wird.

Die Lösung der Aufgabe erfolgt durch die Merkmale der Ansprüche 1, 4 und 6.

Es ist auch denkbar, dass die erste Flüssigkeitsleitung mit einer zweiten Flüssigkeitsleitung in fluidischer Verbindung steht, um die Injektionsnadel zu kühlen.

Die beiden Lösungen unterscheiden sich in sofern, dass die erste eine Möglichkeit der kontinuierlichen und die zweite einer diskontinuierlichen Kühlung ermöglicht.

Um eine Injektion mit einem flüssigen Medium zu ermöglichen, ist die erste Flüssigkeitsleitung mit einer Versorgungsleitung für ein zu injizierendes Medium verbunden. Besonders geeignet ist hier eine separate Leitung mit erhöhten Druckniveau. Die zweite und die dritte Flüssigkeitsleitung ist vorteilhafterweise mit einer Ringleitung für ein Kühlmedium verbunden.

Für den Einsatz der diskontinuierlichen Kühlung sind in der ersten und der zweiten Flüssigkeitsleitung Ventilmittel angeordnet, um diese mit einer Versorgungsleitung für ein zu injizierendes Medium zu verbinden. Die Ventilmittel sind auch geeignet, um die erste Flüssigkeitsleitung und die zweite Flüssigkeitsleitung mit einer Ringleitung für ein Kühlmedium zu verbinden. Es kann also die Flüssigkeitsleitung zum Injizieren und Kühlen verwendet werden. Dies hat somit den Vorteil, dass beim Injizieren beide Flüssigkeitsleitungen verwendet werden und so die doppelte Menge eingebracht werden kann.

Anstelle einer Ringleitung kann auch der direkte Anschluß an eine Versorgungsnetz realisiert werden. Der Ablauf kann problemlos der Entsorgungsleitung zugeführt werden, da beim Einsatz von Wasser als Kühlmedium lediglich eine Erwärmung stattgefunden hat.

Um den Kühleffekt zu beeinflussen, kann vorgesehen werden, das Kühlmedium zu temperieren, so kann es beispielsweise auf 50° C vorgeheizt werden, um Spannungsrisse zu vermeinden.

Zum Injizieren ist ein Hydraulikzylinder vorgesehen, der die Injektornadel betätigt, es könnte aber auch ein Pneumatikzylinder oder ein ähnliches geeignetes Mittel eingesetzt werden.

Besonders vorteilhaft ist es, wenn die Kühlung des Einspritzbausteines bereits während des Schrittes a) erfolgt. Es wird somit erreicht, dass die Schmelze unmittelbar nach der Kontakt mit dem Einspritzbaustein zu erstarren beginnt. Diese Hautbildung führt zu einer Abdichtung eventueller Leckagen. Die Kavität wird dicht gegen über der Schmelze und des einzuspritzenden Fluids. Bei einigen Anwendungen kann es auch sinnvoll sein, die Kühlung des Einspritzbausteines erst während der Eingabe des Fluids durchzuführen. Dies kann beispielsweise bei der Verarbeitung von niedrig viskosen Materialien Anwendung finden.

Die Kühlung des Einspritzbausteines erfolgt fortbildungsgemäß mittels eines Fluids, wobei das Fluid kontinuierlich oder diskontinuierlich zumindest Teile des Einspritzbausteines umspült.

Eine weitere Möglichkeit der Kühlung kann durch den Einsatz einer Ummantelung oder partiellen Ummantelung des Bausteines erfolgen. So ist es beispielsweise denkbar, zumindestens Teile des Einspritzbausteines aus einem Material mit Peltier-Effekt zu beschichten. Es wird hierdurch erreicht, dass ganz gezielt, je nach gewählter Stromrichtung, der Baustein in gewünschten Bereichen gekühlt oder sogar geheizt werden kann.

Es sind folglich die Verfahrensschritte des Strom Ein- bzw. Ausschaltens oder des Umschaltens erforderlich.

In der Zeichnung ist schematisch der Einspritzbaustein dargestellt, es zeigt
- Fig. 1: einen Einspritzbaustein für diskontinuierlichen Betrieb in der Injektionsphase,
- Fig. 2: einen Einspritzbaustein für diskontinuierlichen Beitrieb in der Kühlphase und
- Fig. 3: einen Einspritzbaustein für kontinuierlichen Betrieb.

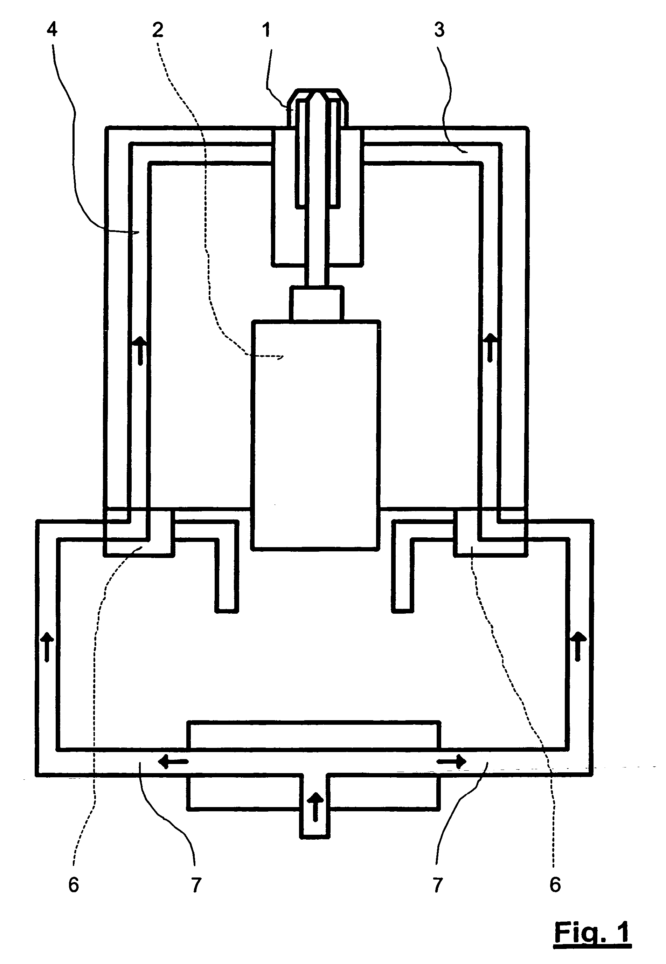

Der in Figur 1 dargestellte Einspritzbaustein zeigt eine Injektionsnadel 1 die über den Betätigungszylinder 2 bewegbar ist. Die Injektionsnadel ragt in die zuveor eingespritzt Schmelze (nicht dargestellt),die sich in der Werkzeugkavität befindet (Kavität nicht dargestellt).Von einem nicht dargestellten Reservoir wird das Injektionsmedium über die Versorgungsleitung 7 bereitgestellt. Die Ventilmittel 6 sind so ausgeführt, dass sie eine Verbindung zwischen der Versorgungsleitung 7 und der ersten 3 sowie der zweiten 4 Flüssigkeitsleitung herstellen können. Wie dargestellt, kann das Injektionsmedium von der Versorgungsleitung 7 in die erste 3 und die zweite 4 Flüssigkeitsleitung gelangen. Die Fließrichtung ist durch die Pfeile angedeutet.

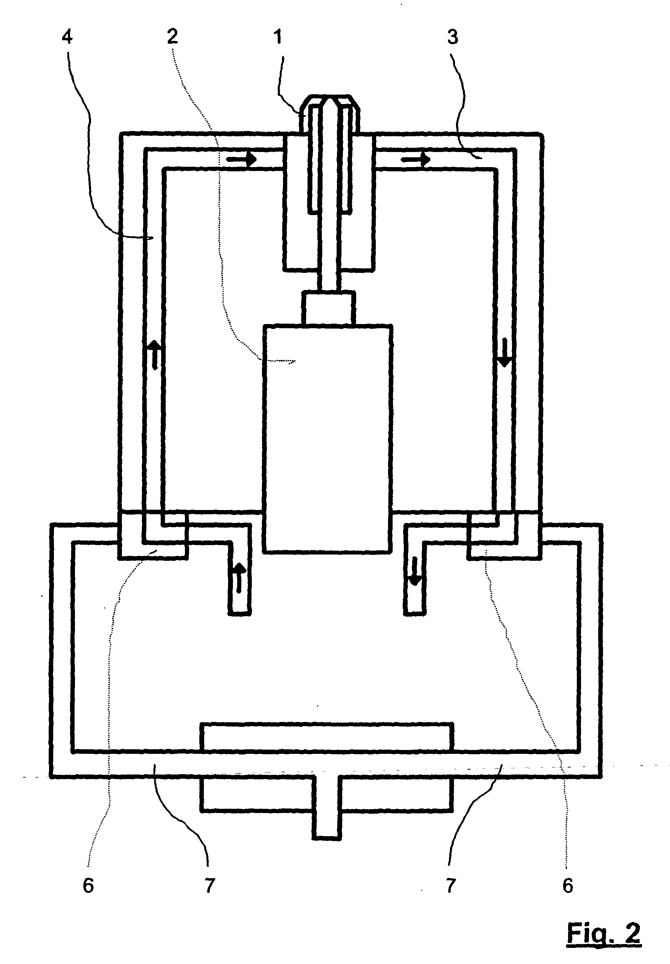

Für die Kühlphase werden die Ventilmittel 6 umgeschaltet und schaffen eine Verbindung der ersten 3 und der zweiten 4 Flüssigkeitsleitung zu einem Kühlkreislauf (angedeutet) wie aus Figur 2 ersichtlich. Es kann nun das Kühlmedium durch die Flüssigkeitsleitungen laufen. Die Pfeile deuten wieder die Fließrichtung an. Das Kühlmedium fließt in diesem Beispiel vom Kühlkreislauf über die zweite Flüssigkeitsleitung 4 um die Injektionsnadel 1 und über die erste Flüssigkeitsleitung 3 zurück in den Kühlkreislauf. Selbstverständlich ist auch eine umgekehrte Fließrichtung oder ein alternierendes Kühlen durch das Kühlmedium denkbar.

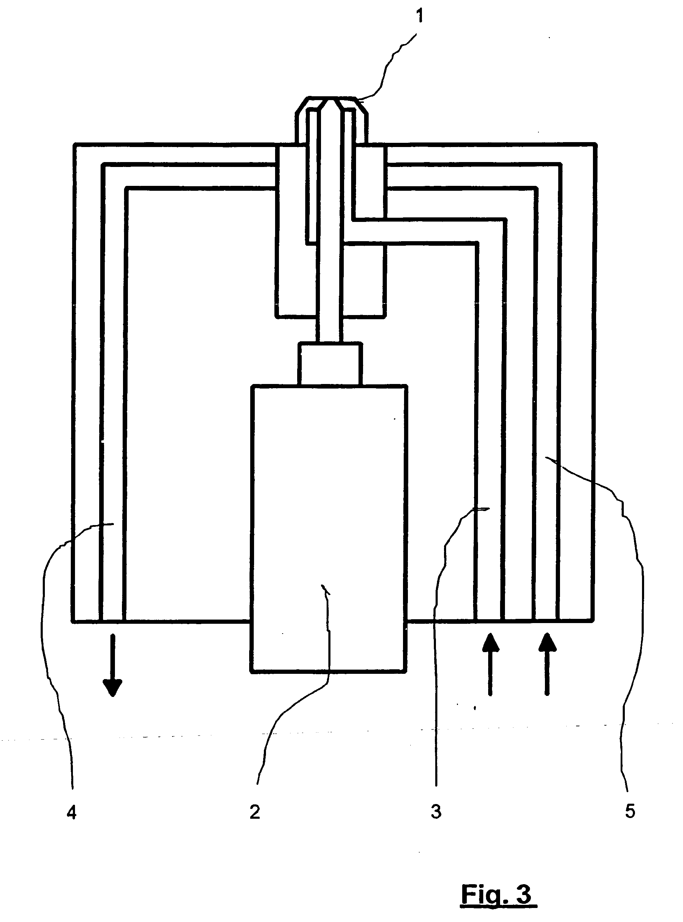

Zum Einsatz für eine kontinuierliche Kühlung ist eine Vorrichtung nach Figur 3 geeignet. Auch hier wird die Injektionsnadel 1 über den Betätigungszylinder 2 angesteuert. Eine erste Flüssigkeitsleitung 3 wird für das Injektionsmedium eingesetzt und steht mit einem Reservoir, nicht dargestellt, in Verbindung. Über eine zweite 4 und eine dritte 5 Flüssigkeitsleitung wird das Kühlmedium geführt. Die Pfeile deuten auch hier wieder die Fließrichtung an. Der Zulauf des Kühlmediums ist hier über die dritte Flüssigkeitsleitung 5 und der Ablauf des Kühlmediums über die zweite Flüssigkeitsleitung 4 realisiert, selbstverständlich ist auch hier eine umgekehrte Verbindung oder ein alternierendes Fließen möglich.

### Bezugszeichenliste:

- 1: Injektionsnadel
- 2: Betätigungszylinder
- 3: erste Flüssigkeitsleitung
- 4: zweite Flüssigkeitsleitung
- 5: dritte Flüssigkeitsleitung
- 6: Ventilmittel
- 7: Versorgungsleitung für Injektionsfluid

## Patentansprüche

1. Vorrichtung zum Kühlen eines Einspritzbausteines, die mindestens
eine Injektionsnadel (1),
einen Betätigungszylinder (2) und
mindestens eine erste Flüssigkeitsleitung (3) umfasst,
**dadurch gekennzeichnet, dass**
eine zweite Flüssigkeitsleitung (4) mit einer dritten Flüssigkeitsleitung (5) in fluidischer Verbindung steht, um die Injektionsnadel (1) zu kühlen.

2. Vorrichtung nach Anspruch 1, **dadurch gekennzeichnet, dass** die erste Flüssigkeitsleitung (3) mit einer Versorgungsleitung für ein zu injizierendes Medium verbunden ist.

3. Vorrichtung nach Anspruch 1 oder 2, **dadurch gekennzeichnet, dass** die zweite (4) und die dritte Flüssigkeitsleitung (5) mit einer Leitung für ein Kühlmedium verbunden ist.

4. Vorrichtung zum Kühlen eines Einspritzbausteines, die mindestens
eine Injektionsnadel (1),
einen Betätigungszylinder (2) und
mindestens eine erste Flüssigkeitsleitung (3) umfasst,
wobei die erste Flüssigkeitsleitung (3) mit einer zweiten Flüssigkeitsleitung (4) in fluidischer Verbindung steht, um die Injektionsnadel (1) zu kühlen,
wobei sowohl die erste (3) also auch die zweite (4) Flüssigkeitsleitung zumindestens zeitweise mit einer Leitung für ein Kühlmedium verbunden ist,
**dadurch gekennzeichnet, dass**
Ventilmittel (6) angeordnet sind, um die erste Flüssigkeitsleitung (3) und die zweite Flüssigkeitsleitung (4) mit einer Versorgungsleitung (7) für ein zu injizierendes Medium oder mit einer Leitung für ein vorzugsweise strömendes Kühlmedium zu verbinden.

5. Vorrichtung nach einem der vorigen Ansprüche, **dadurch gekennzeichnet, dass** die Injektornadel (1) mittels eines Hydraulikzylinders (2) betätigt wird.

6. Verfahren zum Kühlen eines Einspritzbausteins, das die Schritte umfasst:
a) Einspritzen einer plastischen Masse von einer Einspritzeinheit entlang eines Schmelzefließweges in die Kavität eines Spritzgießwerkzeugs;
b) Einspritzen eines Fluids in die noch schmelzflüssige Masse, so daß diese an die Wandungen der Kavität gepreßt wird, wobei das Einspritzen über einen Einspritzbaustein erfolgt;
c) Abkühlenlassen der Masse, bis dieses selbsttragend das Formteil bildet;
d) Entformen des Formteils aus der Kavität des Spritzgießwerkzeugs;
wobei der Einspritzbaustein zumindestens zeitweise gekühlt wird,
**dadurch gekennzeichnet, dass**
Ventilmittel (6) vorgesehen sind, die für die Kühlphase umgeschaltet werden und eine Verbindung der ersten (3) und zweiten (4) Flüssigkeitsleitung schaffen.

7. Verfahren nach Anspruch 6, **dadurch gekennzeichnet, dass** die Kühlung des Einspritzbausteines während des Schrittes a) erfolgt.

8. Verfahren nach Anspruch 7, **dadurch gekennzeichnet, dass** die Kühlung des Einspritzbausteines während oder nach der Eingabe des Fluids erfolgt.

9. Verfahren nach einem der Ansprüche 6 bis 8, **dadurch gekennzeichnet, dass** die Kühlung des Einspritzbausteines mittels eines Fluids erfolgt, wobei das Fluid diskontinuierlich zumindest Teile des Einspritzbausteines umspült.

10. Verfahren nach einem der Ansprüche 6 bis 9, **dadurch gekennzeichnet, dass** die Kühlung des Einspritzbausteines mittels eines Fluids erfolgt, wobei die Strömungsrichtung des Fluids alternierend ist.

11. Verfahren nach einem der Ansprüche 6 bis 10, **dadurch gekennzeichnet, dass** die Kühlung des Einspritzbausteines mittels einer zumindestens teilweisen Ummantelung des Einspritzbausteines oder Teilen des Einspritzbausteines aus einem Material mit Peltier-Effekt erfolgt.

## Claims

1. Device for cooling an injection unit, which comprises at least one injection needle (1), an actuating cylinder (2) and at least a first liquid pipe (3), **characterised in that** a second liquid pipe (4) is in fluid connection with a third liquid pipe (5) in order to cool the injection needle (1).

2. Device according to claim 1, **characterised in that** the first liquid pipe (3) is connected to a supply pipe for a medium to be injected.

3. Device according to claim 1 or 2, **characterised in that** the second (4) and the third liquid pipe (5) is connected to a pipe for a cooling medium.

4. Device for cooling an injection unit, which comprises at least one injection needle (1), an actuating cylinder (2) and at least a first liquid pipe (3), wherein the first liquid pipe (3) is in fluid connection with a second liquid pipe (4) in order to cool the injection needle (1), wherein both the first (3) and the second (4) liquid pipe is connected at least at times to a pipe for a cooling medium, **characterised in that** valve means (6) are arranged in order to connect the first liquid pipe (3) and the second liquid pipe (4) with a supply pipe (7) for a medium to be injected or with a pipe for a preferably flowing cooling medium.

5. Device according to one of the previous claims, **characterised in that** the injector needle (1) is actuated by means of a hydraulic cylinder (2).

6. Process for cooling an injection unit, which comprises the steps:
a) injecting a plastic composition from an injection unit along a melt flow path into the cavity of an injection-moulding die;
b) injecting a fluid into the still molten composition, so that the latter is pressed against the walls of the cavity, wherein injection is effected via an injection unit;
c) allowing the composition to cool until the latter forms the moulding in self-supporting manner;
d) removing the moulding from the cavity of the injection-moulding die;
wherein the injection unit is cooled at least at times, **characterised in that** valve means (6) are provided which are switched over for the cooling phase and provide a connection of the first (3) and second (4) liquid pipe.

7. Process according to claim 6, **characterised in that** cooling of the injection unit is effected during step a).

8. Process according to claim 7, **characterised in that** cooling of the injection unit is effected during or after addition of the fluid.

9. Process according to one of claims 6 to 8, **characterised in that** cooling of the injection unit is effected by means of a fluid, wherein the fluid rinses discontinuously at least parts of the injection unit.

10. Process according to one of claims 6 to 9, **characterised in that** cooling of the injection unit is effected by means of a fluid, wherein the flow direction of the fluid is alternating.

11. Process according to one of claims 6 to 10, **characterised in that** cooling of the injection unit is effected by means of an at least partial cover for the injection unit or parts of the injection unit made from a material having Peltier effect.

## Revendications

1. Dispositif de refroidissement d'un bloc d'injection, qui comprend au moins une aiguille d'injection (1), un vérin d'actionnement (2) et au moins une première conduite de liquide (3), **caractérisé par le fait qu'**une deuxième conduite de liquide (4) communique avec une troisième conduite de liquide (5) pour refroidir l'aiguille d'injection (1).

2. Dispositif selon la revendication 1, **caractérisé par le fait que** la première conduite de liquide (3) communique avec une conduite d'alimentation pour un fluide à injecter.

3. Dispositif selon l'une des revendications 1 et 2, **caractérisé par le fait que** la deuxième conduite de liquide (4) et la troisième conduite de liquide (5) communiquent avec une conduite pour un fluide de refroidissement.

4. Dispositif de refroidissement d'un bloc d'injection, qui comprend au moins une aiguille d'injection (1), un vérin d'actionnement (2) et au moins une première conduite de liquide (3), la première conduite de liquide (3) communiquant avec une deuxième conduite de liquide (4) pour refroidir l'aiguille d'injection (1), la première conduite de liquide (3) et la deuxième conduite de liquide (4) communiquant au moins par moments avec une conduite pour un fluide de refroidissement, **caractérisé par le fait qu'**il y est prévu des vannes (6) servant à faire communiquer la première conduite de liquide (3) et la deuxième conduite de liquide (4) avec une conduite d'alimentation (7) pour un fluide à injecter ou avec une conduite pour un fluide de refroidissement de préférence en écoulement.

5. Dispositif selon l'une des revendications précédentes, **caractérisé par le fait que** l'aiguille d'injection (1) est actionnée par un vérin hydraulique (2).

6. Procédé de refroidissement d'un bloc d'injection qui comprend les étapes suivantes :
a) injection d'une matière plastique par un dispositif d'injection, le long d'une voie d'écoulement de matière fondue, dans la cavité d'un moule d'injection,
b) injection d'un fluide dans la matière plastique encore liquide, de façon que celle-ci soit pressée contre les parois de la cavité, l'injection étant faite par un bloc d'injection,
c) refroidissement naturel de la matière jusqu'à ce que celle-ci forme, la pièce moulée, autoportante,
d) démoulage de la pièce moulée de la cavité du moule d'injection,
le bloc d'injection était refroidi au moins par moments,
**caractérisé par le fait qu'**il est prévu des vannes (6) qui sont inversées pour la phase de refroidissement et créent une communication de la première conduite de liquide (4) et de la deuxième conduite de liquide (4).

7. Procédé selon la revendication 6, **caractérisé par le fait que** le refroidissement du bloc d'injection a lieu pendant l'étape a).

8. Procédé selon la revendication 7, **caractérisé par le fait que** le refroidissement du bloc d'injection a lieu pendant ou après l'introduction du fluide.

9. Procédé selon l'une des revendications 6 à 8, **caractérisé par le fait que** le refroidissement du bloc d'injection est effectué au moyen d'un fluide qui balaie de façon discontinue au moins des parties du bloc d'injection.

10. Procédé selon l'une des revendications 6 à 9, **caractérisé par le fait que** le refroidissement au bloc d'injection est effectué au moyen d'un fluide, le sens d'écoulement de ce fluide alternant.

11. Procédé selon l'une des revendications 6 à 10, **caractérisé par le fait que** le refroidissement du bloc d'injection est effectué au moyen d'un enveloppement au moins partiel du bloc d'injection ou de parties de celui-ci d'une matière à effet Peltier.
